# EUROPÄISCHE PATENTANMELDUNG

(11) **EP 3 291 416 A1**
(43) Veröffentlichungstag der Anmeldung: **07.03.2018**
(21) Anmeldenummer: 16187206.4
(22) Anmeldetag: 05.09.2016
(51) Int. Cl.: H02K 3/22, H02K 3/50, H02K 9/10

(54) **KÜHLSYSTEM FÜR GASGEKÜHLTE SCHALTLEITUNGEN**

(71) Anmelder: Siemens Aktiengesellschaft, 80333 München (DE)
(72) Erfinder: Kowalski, Matthias, 45478 Mülheim an der Ruhr (DE)

(57) **Zusammenfassung**

Die Erfindung betrifft eine Schaltleitungskühlvorrichtung (1) zur Gaskühlung des elektrischen Anschlusses einer Ständerwicklung eines Turbogenerators, aufweisend eine Schaltleitung (2) mit einer gasgekühlten Hohlleiterstrecke (12), die entlang einer ersten Teilstrecke (12.1) einen ersten Kühlkanal (14.1) aufweist, der sich ausgehend von einem Hochdruckraum (80) bis hin zu einem Niederdruckraum (90) des Turbogenerators erstreckt, wobei die Kühlvorrichtung (1) einen zweiten Kühlkanal (14.2) aufweist, der sich entlang einer zweiten Teilstrecke (12.2) der Hohlleiterstrecke in dem Hochdruckraum bis hin zu einer Gasschnittstelle (20) der zweiten Teilstrecke und von dort in einer Fluidleitung (22) des zweiten Kühlkanals bis hin zu dem Niederdruckraum erstreckt.

## Beschreibung

Die Erfindung betrifft eine Schaltleitungskühlvorrichtung zur Gaskühlung eines elektrischen Anschlusses einer Ständerwicklung eines Turbogenerators, sowie einen Turbogenerator mit wenigstens einer solchen Schaltleitungskühlvorrichtung.

Schaltleitungen verschalten die Ständerwicklung eines Turbogenerators und verlaufen vom Wickelkopfbereich bis hin zu einem Ausleitungskasten. Im Fall einer direkt gekühlten Bauform sind diese Teile aus Kupferrohren mit innerem Kühlkanal gefertigt. Die durch den Stromfluss generierte Joule'sche Wärme führt zu einer Erhitzung dieser Bauteile. Der innere Kühlkanal der als Hohlleiter ausgebildeten Schaltleitung verbindet den Wickelkopfraum (sprich dem Hochdruckraum des Turbogenerators) mit dem Ausleitungskasten (oder einem anderen Niederdruckraum des Turbogenerators). Durch die Druckdifferenz zwischen dem Hochdruckraum und dem Niederdruckraum wird ein Volumenstrom durch den Kühlkanal der Schaltleitung hervorgerufen, welcher das Bauteil konvektiv kühlen soll.

Besonders bei Luft oder anderen gasförmigen Kühlmedien tritt - insbesondere bei längeren Schaltleitungen - das Problem auf, dass sich das Kühlgas längs der Schaltleitung im Kühlkanal durch die aufgenommene Wärme erhitzt. Mit zunehmender Länge des Kühlkanals führt dies zu schlechteren Kühlbedingungen, insbesondere "stromabwärts" im Kühlkanal, da die Temperaturdifferenz zwischen Kühlgas und dem Kupfer der Schaltleitung sukzessive kleiner wird. Dies kann - insbesondere am Niederdruck-seitigen Ende der Schaltleitung - zu einer unzulässig hohen Erwärmung mit Überschreiten einer Grenztemperatur des Kupfermaterials der Schaltleitung führen.

Ein höherer Volumenstrom des Kühlgases könnte dieses Problem theoretisch lösen; jedoch kann ein solcher nur durch eine Druckdifferenzerhöhung oder einen kleineren Strömungswiderstand erzeugt werden. Ersteres scheitert an dem großen Aufwand für ein anderes Gebläse. Letzteres an Bauraumbeschränkungen im Wickelkopfraum, die keine größeren Ringleitungen zulassen.

Auch eine direkte Wasserkühlung wäre an sich denkbar. Allerdings wäre diese Maßnahme mit enormen Zusatzkosten verbunden, die einen wirtschaftlichen Betrieb des Turbogenerators gefährden würden.

Eine Aufgabe der Erfindung ist daher die Bereitstellung einer leistungsfähigeren Gaskühlung des elektrischen Anschlusses einer Ständerwicklung eines Turbogenerators.

Eine erfindungsgemäße Schaltleitungskühlvorrichtung zur Gaskühlung eines elektrischen Anschlusses einer Ständerwicklung eines Turbogenerators weist eine Schaltleitung mit einer ersten gasgekühlten Hohlleiterstrecke auf, die entlang einer ersten Teilstrecke einen ersten Kühlkanal aufweist, der sich in einem montierten Zustand ausgehend von einem Hochdruckraum des Turbogenerators bis hin zu einem Niederdruckraum des Turbogenerators erstreckt.

Erfindungsgemäß weist die Kühlvorrichtung einen zweiten Kühlkanal auf, der sich entlang einer zweiten Teilstrecke der Hohlleiterstrecke in dem Hochdruckraum bis hin zu einer Gasschnittstelle der zweiten Teilstrecke und von dort in einer Fluidleitung des zweiten Kühlkanals bis hin zu dem Niederdruckraum erstreckt.

Der Erfindung liegt unter anderem die Idee zugrunde, bei längeren Schaltleitungen nicht nur an einer Stelle Kühlgas (sprich Kühlluft) einzusaugen, die dann entlang der gesamten Hohlleiterstrecke für ausreichend Kühlung sorgen muss. Stattdessen sind mehrere - in Serie angeordnete - Teilstrecken mit separaten Kühlkanälen vorgesehen, die getrennt voneinander aus dem Hochdruckraum mit Kühlgas versorgt werden. Dann muss das Kühlgas nur entlang einer kürzeren Teilstrecke für die Kühlung der Schaltleitung sorgen, solange es noch nicht durch seine Kühlfunktion stark erwärmt wurde und damit an Kühlpotential verliert.

Die erfindungsgemäße Anordnung der Kühlkanäle "nacheinander" bringt es mit sich, dass die zweite (und eventuell weitere) Teilstrecken komplett im Hochdruckraum angeordnet sind. Das macht es erforderlich, den zweiten (und weitere) Kühlkanäle nicht nur entlang der zweiten oder weiteren Teilstrecke zu führen, sondern eine Gasschnittstelle vorzusehen, von der aus der zweite (und weitere) Kühlkanäle jeweils in einer Fluidleitung bis hin zum Niederdruckraum weitergeführt werden. Denn nur so kann mittels der Druckdifferenz zwischen einem Eingang des zweiten (oder weiteren) Kühlkanals und einem Ausgang des zweiten (oder weiteren) Kühlkanals ein Kühlgasstrom aus dem Hochdruckraum in den Niederdruckraum und damit der für die Kühlwirkung notwendige Gasstrom für die zweite Teilstrecke sichergestellt werden.

Um ein Einleiten von bereits vorerwärmtem Kühlgas in die erste Teilstrecke zu vermeiden, sind gemäß einer bevorzugten Ausführung die erste Teilstrecke und die zweite Teilstrecke mittels eines Trennelements bezüglich einer Gasführung (d.h. gasdicht) voneinander getrennt.

Vorzugsweise teilt das Trennelement dabei einen Hohlraum der Hohlleiterstrecke an einem Übergang zwischen der ersten Teilstrecke und der zweiten Teilstrecke gasdicht in einen ersten Hohlraum und einen zweiten Hohlraum auf. Das Trennelement ist vorzugsweise mit einem elektrisch leitenden Material, beispielsweise Kupfer, ausgebildet, und/oder erstreckt sich nur anliegend an die Leiterwand in dem gesamten Hohlraum. Ein elektrisch leitendes Trennelement kann über den gesamten Querschnitt der Schaltleitung ausgebildet sein, weil damit die elektrische Leiterfunktion der Schaltleitung sichergestellt ist. Ein nicht elektrisch leitendes Trennelement, beispielsweise aus einem geeigneten Kunststoff, kann hingegen nur im Hohlraum anliegend an die Innenwände des Hohlleiters ausgebildet sein.

Um einen Kühlgasstrom im ersten Hohlraum sicherzustellen, weist dieser gemäß einer bevorzugten Ausführung einen ersten Gaseinlass auf, der in dem Hochdruckraum des Turbogenerators angeordnet ist. Gemäß dieser Ausführung weist der erste Hohlraum auch einen ersten Gasauslass auf, der in einem Niederdruckraum des Turbogenerators angeordnet ist. Damit ist die Gaskonvektion durch den ersten Hohlraum, der den ersten Kühlkanal bildet, sichergestellt.

Um eine ausreichende Konvektion von Kühlgas auch im zweiten Kühlkanal sicherzustellen, weist gemäß einer bevorzugten Ausführung der zweite Hohlraum einen zweiten Gaseinlass auf, der in dem Hochdruckraum des Turbogenerators angeordnet ist. Zudem weist der zweite Hohlraum eine Gasschnittstelle zu der Fluidleitung auf. In dieser Ausführung weist auch die Fluidleitung eine zu der Gasschnittstelle des zweiten Hohlraums passende Gasschnittstelle zu dem zweiten Hohlraum auf. Gemäß dieser Ausführung weist die Fluidleitung zusätzlich einen zweiten Gasauslass auf, der der in dem Niederdruckraum des Turbogenerators angeordnet ist.

Gemäß einer bevorzugten Ausführung besteht die Fluidleitung des zweiten Kühlkanals aus einem im Wesentlichen elektrisch nicht leitenden Material, um den Fluss von elektrischem Strom auf die Hohlleiterstrecke der Schaltleitung zu begrenzen.

Im Sinne der Erfindung wird auch eine Schaltleitungskühlvorrichtung für Schaltleitungen mit einer so großen Länge bereitgestellt, dass mehr als zwei Teilstrecken mit jeweils einem separaten Kühlkanal erforderlich sind. Gemäß einer bevorzugten Ausführung weist dabei die Schaltleitung wenigstens zwei Teilstrecken mit jeweils einem Kühlkanal auf, wobei zwischen je zwei benachbarten Teilstrecken ein Verbindungsmodul angeordnet ist, das die Teilstrecken elektrisch verbindet. Beispielsweise ist also auch vorgesehen, dass zwischen einer ersten und einer zweiten Teilstrecke ein solches Verbindungsmodul angeordnet ist und nochmals zwischen einer zweiten und einer dritten Teilstrecke.

Vorzugsweise weist das Verbindungsmodul einen Gaseinlass für den zuvor angeordneten Kühlkanal (als beispielsweise den ersten oder im anderen Fall den zweiten) und eine Gasschnittstelle für den nachfolgend angeordneten Kühlkanal (also für den zweiten oder im anderen Fall für den dritten) auf. Damit kann sichergestellt werden, dass jeder Kühlkanal mit Kühlgas aus dem Hochdruckraum versorgt werden kann, und dass jeder Kühlkanal mit einer Fluidleitung verbunden werden kann, die den entsprechenden Kühlkanal bis in den Niederdruckraum weiterführt.

Auch eine andere Bauweise zur Standardisierung einer Schaltleistungskühlvorrichtung im Sinne der Erfindung wird gemäß einer bevorzugten Ausführung bereitgestellt: dabei weist die Schaltleitung ein Basis-Bauteil auf, das im Niedrigdruckraum angeordnet ist, und wenigstens zwei identische Teilstrecken-Elemente, wobei das erste Teilstrecken-Element an dem Basis-Bauteil angeordnet ist und das zweite Teilstrecken-Element an dem ersten Teilstrecken-Element angeordnet ist.

Die Erfindung ist nicht auf eine Schaltleitung mit zwei Teilstrecken und damit einem ersten und einem zweiten Kühlkanal beschränkt. Vielmehr sind Anwendungen mit längeren Schaltleitungen denkbar, die aufgrund der schnellen Erwärmung der Kühlluft eine dritte Teilstrecke oder gar eine vierte oder fünfte Teilstrecke mit jeweils einem Kühlkanal erfordern, der für zwischen dem Hochdruckraum und dem Niedrigdruckraum verläuft. Fluidleitungen unterschiedlicher Länge können dafür an die entsprechenden Teilstrecken angeschlossen werden.

Gemäß einem Aspekt der Erfindung wird ein Turbogenerator mit wenigstens einer Schaltleitungskühlvorrichtung gemäß einer Ausführung der Erfindung bereitgestellt.

Die oben beschriebenen Eigenschaften, Merkmale und Vorteile dieser Erfindung sowie die Art und Weise, wie diese erreicht werden, werden klarer und deutlicher verständlich im Zusammenhang mit der vorliegenden Beschreibung der Ausführungsbeispiele, die im Zusammenhang mit den Zeichnungen näher erläutert werden, wobei zeigt:
- Figur 1: in einer Schnittansicht eine bekannte Schaltleitungskühlvorrichtung und eine längere Schaltleitungskühlvorrichtung nach einer Ausführung der Erfindung;
- Figur 2: in einer Schnittansicht zwei gleich lange, in einer Querschnittsebene angeordnete Schaltleitungskühlvorrichtungen nach einer Ausführung der Erfindung; und
- Figur 3: in einer Schnittansicht ein Verbindungsmodul zur Anordnung zwischen zwei Teilstrecken einer Schaltleitung mit einer Kühlvorrichtung nach einer Ausführung der Erfindung.

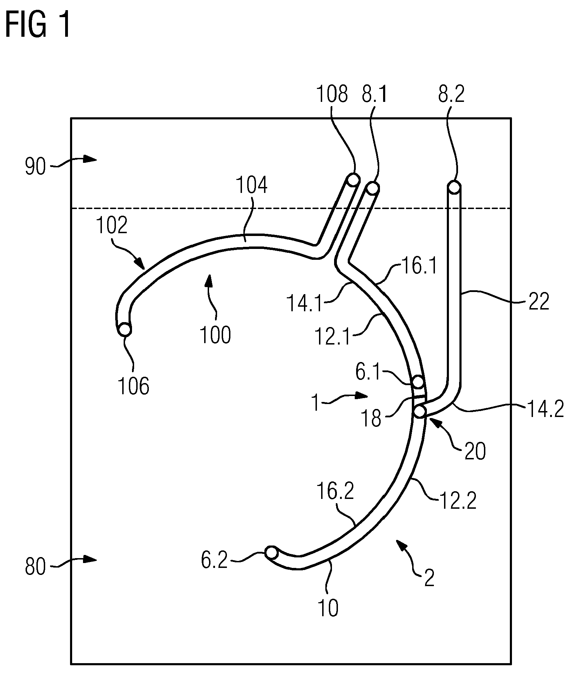

In Figur 1 ist auf der linken Seite der Darstellung eine bekannte Schaltleitungskühlvorrichtung 100 zur Gaskühlung einer ausreichend kurzen Schaltleitung 102 mit einem einzigen Kühlkanal 104 dargestellt. Der bekannte Kühlkanal 104 verläuft ausgehend von einem Gaseinlass 106 in einem Hochdruckraum 80 eines nicht dargestellten Turbogenerators bis hin zu einem Gasauslass 108 in einem Niederdruckraum 90 des Turbogenerators.

Auf der rechten Seite in Figur 1 ist eine - in der gleichen Querschnittsebene des Turbogenerators angeordnete - deutlich längere und erfindungsgemäße Schaltleitungskühlvorrichtung 1 mit einer Schaltleitung 2 dargestellt. Die Schaltleitung 2 weist einen elektrischen Hohlleiter auf, der entlang einer gesamten Hohlleiterstrecke 10 der Schaltleitung 2 von dem Hochdruckraum 80 des Turbogenerators bis zu dessen Niederdruckraum 90 verläuft.

Bezüglich der Führung von Kühlgas ist die Schaltleitung 2 jedoch in zwei Teilstrecken 12.1 und 12.2 aufgeteilt. Die Teilstrecke 12.1 arbeitet hinsichtlich der Gaskühlung von der Funktionsweise analog zur bekannten Schaltleitungskühlvorrichtung 100, die auf der linken Seite von Figur 1 dargestellt ist. Von einem ersten Gaseinlass 6.1 strömt durch den ersten Kühlkanal 14.1 Kühlluft bis zu dem ersten Gasauslass 8.1 im Niedrigdruckraum 90. Der erste Kühlkanal 14.1 ist ausgebildet durch den ersten Hohlraum 16.1, und deutlich kürzer als der Kühlkanal 104 der bekannten Schaltleitungskühlvorrichtung 100. Daher steht in dem ersten Kühlkanal 14.1 bis zum Gasauslass 8.1 problemlos ausreichend kalte Kühlluft für eine Kühlung der Schaltleitung 2 zur Verfügung, während der Kühlkanal 104 im Ausführungsbeispiel die maximale ohne die Erfindung ausreichend kühlbare Länge aufweist.

Anschließend an die erste Teilstrecke 12.1 der Schaltleitung 2 erstreckt sich die zweite Teilstrecke 12.2 der Schaltleitung 2. Diese ist bezüglich Gasführung mittels des als Kunststoffpfropfen ausgebildeten Trennelements 18 gasdicht abgetrennt. So verfügt die zweite Teilstrecke 12.1 über einen von dem ersten Hohlraum 16.1 abgetrennten zweiten Hohlraum 16.2

Der zweite Hohlraum 16.2 ist als ein erster Abschnitt eines zweiten Kühlkanals 14.2 ausgebildet, wobei dieser Abschnitt in dem zweiten Hohlraum 16.2 von einem zweiten Gaseinlass 6.2 bis zu einer Gasschnittstelle 20 zwischen dem zweiten Hohlraum 16.2 und einem Fluidleiter 22 verläuft. Anschließend verläuft ein zweiter Abschnitt des zweiten Kühlkanals 14.2 in einem Hohlraum des Fluidleiters 22 bis in den Niederdruckraum 90.

Damit ist zum einen sichergestellt, dass auch die am Gaseinlass 6.2 eingesaugte Kühlluft nur so lange zur Kühlung der Schaltleitung verwendet wird, wie sie noch kalt genug dafür ist. Zum anderen ist mittels der Fluidleitung 22 sichergestellt, dass wegen der Druckdifferenz zwischen dem Gaseinlass 6.2 im Hochdruckraum 80 und dem Ende des Fluidleiters 22 im Niederdruckraum 90 überhaupt ein Gasstrom fließt.

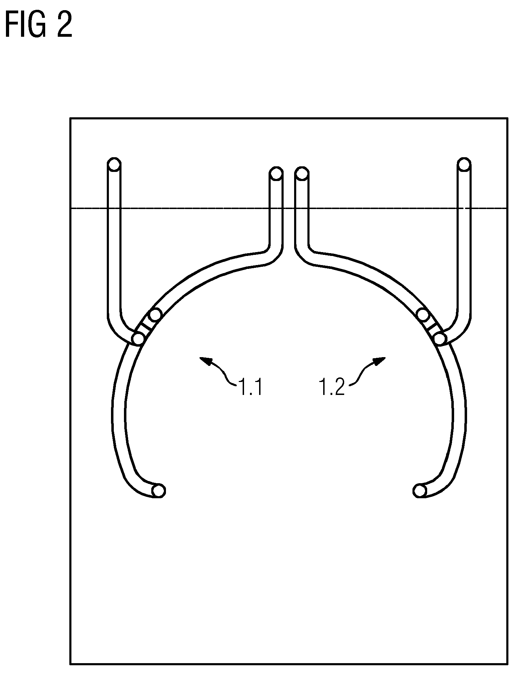

In Figur 2 sind zwei in derselben Schnittebene angeordnete Schaltleitungskühlvorrichtungen 1.1 und 1.2 dargestellt, wobei funktional jede der Schaltleitungskühlvorrichtung 1.1 und 1.2 vollständig der Schaltleitungskühlvorrichtung 1 gemäß Figur 1 entspricht.

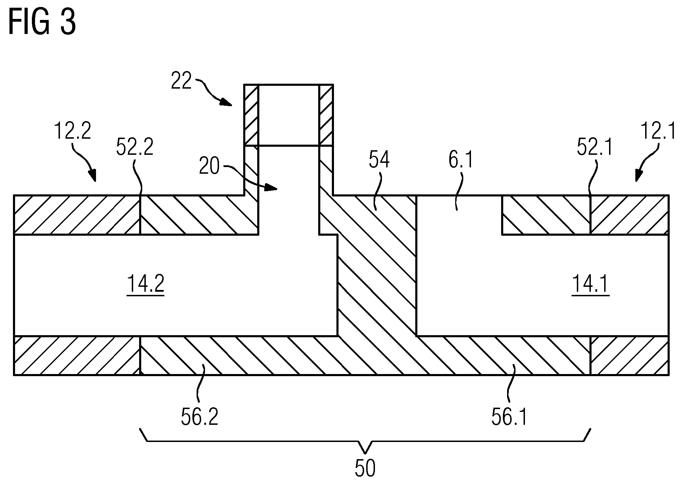

In Figur 3 ist ein Verbindungsmodul 50 dargestellt, das gemäß einer beispielhaften Ausführung der Erfindung zumindest die Funktionalität folgender Elemente aus Figur 1 in sich vereinen kann: erster Gaseinlass 6.1, Trennelement 18, Gasschnittstelle 20 sowie elektrische Stromleitung.

Das Verbindungsmodul 50 ist zwischen dem ersten Kühlkanal 14.1 und dem zweiten Kühlkanal 14.2 angeordnet und stellt dessen Schnittstellen bereit. Dazu ist es sowohl hin zur ersten Teilstrecke 12.1 als auch hin zur zweiten Teilstrecke 12.2 mittels Schweiß-, Löt- und/oder Schraubverbindungen 52 stromleitend verbunden.

Im Ausführungsbeispiel nach Figur 3 sind sowohl das Trennelement 54 des Verbindungsmoduls 50 als auch dessen Umfangswände 56 aus Kupfer ausgebildet. Durch das Trennelement 54 sind der erste Kühlkanal 14.1 und der zweite Kühlkanal 14.2 voneinander getrennt. Das Verbindungsmodul 50 weist auf seiner Seite hin zur ersten Teilstrecke 12.1 einen ersten Gaseinlass 6.1 auf und an seiner Seite hin zur zweiten Teilstrecke 12.2 eine Fluidschnittstelle 20, die dem Anschluss eines Fluidleiters 22 dient. Der Fluidleiter 22 kann beispielsweise über die Wand der Gasschnittstelle 20 übergestülpt und dort gegen Abrutschen gesichert werden. Andere Verbindungen liegen im Ermessen des Fachmanns und sind ebenso im Sinne der Erfindung denkbar.

Durch Verwenden eines derartigen Verbindungsmoduls 50 kann eine Schaltleitung 2 gemäß einer beispielhaft im Sinne der Erfindung ausgestalteten Schaltleitungskühlvorrichtung 1 aus einfachen Kupferhohlrohren für die Teilstrecken und solchen Verbindungsmodulen aufgebaut werden. Dies kann die Fertigung einfacher und die Vorrichtung insgesamt kostengünstiger machen.

## Patentansprüche

1. Schaltleitungskühlvorrichtung (1) zur Gaskühlung des elektrischen Anschlusses einer Ständerwicklung eines Turbogenerators, aufweisend eine Schaltleitung (2) mit einer gasgekühlten Hohlleiterstrecke (12), die entlang einer ersten Teilstrecke (12.1) einen ersten Kühlkanal (14.1) aufweist, der sich ausgehend von einem Hochdruckraum (80) bis hin zu einem Niederdruckraum (90) des Turbogenerators erstreckt,
**dadurch gekennzeichnet, dass**
die Kühlvorrichtung (1) einen zweiten Kühlkanal (14.2) aufweist, der sich entlang einer zweiten Teilstrecke (12.2) der Hohlleiterstrecke in dem Hochdruckraum bis hin zu einer Gasschnittstelle (20) der zweiten Teilstrecke und von dort in einer Fluidleitung (22) des zweiten Kühlkanals bis hin zu dem Niederdruckraum erstreckt.

2. Schaltleitungskühlvorrichtung gemäß Anspruch 1, wobei die erste Teilstrecke und die zweite Teilstrecke mittels eines Trennelements (18) bezüglich einer Gasführung voneinander getrennt sind.

3. Schaltleitungskühlvorrichtung gemäß Anspruch 2, wobei das Trennelement einen Hohlraum (16) der Hohlleiterstrecke an einem Übergang zwischen der ersten Teilstrecke und der zweiten Teilstrecke gasdicht in einen ersten Hohlraum (16.1) und einen zweiten Hohlraum (16.2) aufteilt.

4. Schaltleitungskühlvorrichtung gemäß Anspruch 3, wobei der erste Hohlraum einen ersten Gaseinlass (6.1) aufweist, der in einem Hochdruckraum des Turbogenerators angeordnet ist, und wobei der erste Hohlraum einen ersten Gasauslass (8.1) aufweist, der in einem Niederdruckraum des Turbogenerators angeordnet ist.

5. Schaltleitungskühlvorrichtung gemäß einem der Ansprüche 3 oder 4, wobei der zweite Hohlraum einen zweiten Gaseinlass (6.2) aufweist, der in einem Hochdruckraum des Turbogenerators angeordnet ist, und wobei der zweite Hohlraum eine Gasschnittstelle zu der Fluidleitung aufweist.

6. Schaltleitungskühlvorrichtung gemäß einem der vorherigen Ansprüche, wobei die Fluidleitung eine Gasschnittstelle (20) zu dem zweiten Hohlraum und einen zweiten Gasauslass (8.2) aufweist, der in einem Niederdruckraum des Turbogenerators angeordnet ist.

7. Schaltleitungskühlvorrichtung gemäß einem der vorherigen Ansprüche, wobei die Fluidleitung des zweiten Kühlkanals aus einem im Wesentlichen elektrisch nicht leitenden Material besteht.

8. Schaltleitungskühlvorrichtung gemäß einem der vorherigen Ansprüche, wobei die Schaltleitung wenigstens zwei Teilstrecken mit jeweils einem Kühlkanal aufweist, und wobei zwischen je zwei benachbarten Teilstrecken ein Verbindungsmodul angeordnet ist, das die Teilstrecken elektrisch verbindet.

9. Schaltleitungskühlvorrichtung gemäß Anspruch 8, wobei das Verbindungsmodul einen Gaseinlass für den zuvor angeordneten Kühlkanal und eine Gasschnittstelle für den nachfolgend angeordneten Kühlkanal aufweist.

10. Turbogenerator mit wenigstens einer Schaltleitungskühlvorrichtung gemäß einem der vorherigen Ansprüche.
